# EUROPEAN PATENT APPLICATION

(11) **EP 1 650 270 A1**
(43) Date of publication of application: **26.04.2006**
(21) Application number: 04748029.8
(22) Date of filing: 22.07.2004
(51) Int. Cl.: C09D 11/00

(54) **AQUEOUS INK**

(30) Priority: 23.07.2003 JP 2003200203
(71) Applicant: TOAGOSEI CO., LTD., Tokyo 105-8419 (JP)
(72) Inventor: 3HAYASHI, Katsuhiro, c/o Toagosei Co., Ltd., Minato-ku, Nagoya-shi, Aichi 455-0027 (JP); MAEDA, Keiji c/o Toagosei Co., Ltd., Minato-ku, Nagoya-shi, Aichi 455-0027 (JP); GOTOH, Akihiro c/o Toagosei Co., Ltd., Minato-ku, Nagoya-shi, Aichi 455-0027 (JP); MORI, Yoshio2c/o Toagosei Co., Ltd., Minato-ku, Nagoya-shi, Aichi 455-0027 (JP)
(74) Representative: Pohlmann, Eckart
(86) International application number: PCT/JP2004/010764
(87) International publication number: WO 2005/007760

(57) **Abstract**

The present invention relates to an aqueous ink containing a dispersant composed of a crosslinked copolymer which is excellent in dispersibility of a colorant such as a pigment and is capable of stably maintaining the dispersed state in an aqueous medium for a long period of time. Specifically, it is an aqueous ink containing a dispersant, a colorant, and an aqueous medium, the dispersant being composed of a crosslinked copolymer containing (A) a crosslinkable monomer, (B) an aromatic group-containing monomer, and (C) an ionic monomer as essential constituting components.

## Description

### <Technical Field>

The present invention relates to an aqueous ink which is low in dispersion viscosity and excellent in storage stability.

### <Background Art>

An aqueous ink for use in aqueous ball-point pens and inkjet recording has a fundamental constitution of a dispersant comprising a polymer having a specific structure or the like, an aqueous medium, a pigment, and the like. In such a dispersant, it is important for the polymer to have a function as a surfactant possessing both of hydrophobicity and hydrophilicity. Specifically, there are known graft copolymers comprising a hydrophobic macromonomer containing an aromatic monomer such as styrene or vinyltoluene or a (meth)acrylic acid ester as a constituting unit and a hydrophilic monomer and graft copolymers comprising a hydrophilic macromonomer containing a monomer such as (meth)acrylic acid, maleic acid, or a (meth)acrylic acid hydroxyalkyl ester and a phydrophobic monomer (e.g., JP-A-6-100810, etc.).

Similarly, there are disclosed a pigment dispersant comprising an acrylic acid graft copolymer having a main chain containing a hydrophobic (meth)acrylic acid monomer and an anionic and nonionic hydrophilic side chains connecting to the main chain (JP-A-2002-179978) and an aqueous ink comprising a graft copolymer containing a polymer obtained from a cationic or anionic monomer as a backbone and a (meth)acrylic macromonomer as a side chain (JP-A-2001-247796).

However, in the case of the aqueous inks using the above graft copolymers, dispersion stability of a colorant is not sufficient. In particular, it is difficult to stably disperse carbon black in an aqueous medium. In addition, in the case of dispersants described in JP-A-2002-179978 and JP-A-2001-247796, in order to make the graft copolymers water-soluble, it is necessary to introduce a large amount of the hydrophilic side chains, so that there is a problem that the dispersant cannot be produced inexpensively in an industrial scale. Moreover, in the case of the graft copolymer described in JP-A-6-100810, when a large amount of the hydrophobic component is incorporated into the side chain for exhibiting a sufficient dispersion stability, there is a problem that it becomes difficult to copolymerize it with the hydrophilic main chain. Furthermore, when a large amount of the hydrophobic component is incorporated, there arises a problem that a solution becomes turbid and viscosity thereof increases when the graft copolymer is dissolved in an aqueous medium, so that a sufficient dispersion stability cannot be exhibited.

On the other hand, there is disclosed, as a scale inhibitor, a crosslinked polymer wherein polymer main chains are linked each other using a crosslinking agent, a crosslinkable monomer, or the like (e.g., JP-T-2000-502394, etc.). Moreover, there is disclosed, as a dispersant, a crosslinked amphoteric polymer comprising an amphoteric monomer obtained by reacting (meth)acrylic acid with an aminoalkylamide or the like and a crosslinkable monomer (JP-A-58-13609).

In the case of a crosslinked polymer wherein main chains of the polymer are linked each other, when a ratio of the crosslinking agent or crosslinkable monomer used becomes too large, the polymer formed has a higher molecular weight and an increased viscosity, and further, solubility thereof becomes worse. As a result, the polymer cannot function as a dispersant anymore. Therefore, it is necessary to prepare a low-molecular-weight crosslinked polymer having a low viscosity and a high dispersing performance, for example, by limiting the amount of the crosslinking agent or crosslinkable monomer to be used.

### <Disclosure of the Invention>

The present inventors have found that, as an aqueous ink, a low-molecular-weight crosslinked polymer containing a limited amount of a crosslinkable monomer and having a crosslinked structure is excellent in pigment dispersibility and can stably maintain the dispersed state in an aqueous medium over a long period of time and hence the above problems can be solved. Thus, they have accomplished the invention. Namely, the invention relates to an aqueous ink comprising, as a dispersant, a crosslinked copolymer containing, as essential constituting components, a crosslinkable monomer, an aromatic group-containing monomer and an ionic monomer, a colorant, and an aqueous medium.

### <Best Mode for Carrying Out the Invention>

The present invention relates to an aqueous ink comprising a dispersant, a colorant, and an aqueous medium, the dispersant being composed of a crosslinked copolymer containing, as constituting components, (A) a crosslinkable monomer, (B) an aromatic group-containing monomer, and (C) an ionic monomer as essential components.

In this connection, "(meth)acryl" herein means methacryl or acryl.

### 1. Dispersant

The dispersant for use in the aqueous ink of the invention is composed of a crosslinked copolymer containing the following (A) crosslinkable monomer, (B) aromatic group-containing monomer, and (C) ionic monomer as essential constituting components.

### 1.1 Essential components

### (A) Crosslinkable monomer

As the (A) crosslinkable monomer constituting the crosslinked copolymer according to the invention, a compound having two or more vinyl groups in one molecule can be employed and there may be, for example, mentioned methylenebisacrylamide, methylenebismethacrylamide, butanediol di(meth)acrylate, ethylene glycol di(meth)acrylate, propylene glycol di(meth)acrylate, polyethylene glycol di(meth)acrylate, polypropylene glycol di(meth)acrylate, trimethylolpropane tri(meth)acrylate, pentaerythritol poly(meth)acrylate, di(meth)acryloxyethyl phosphate, triallyl cyanurate, triallyl isocyanurate, divinylbenzene, maleic acid diallyl ester, polyallylsucrose, and the like. In this connection, only one or two or more of the above crosslinkable monomers may be used.

### (B) Aromatic group-containing monomer

As the (B) aromatic group-containing monomer constituting the crosslinked copolymer according to the invention, there may be mentioned styrene-based monomers, phenyl group-containing (meth)acrylates, phenyl group-containing maleimides, and the like.

Specific examples of the styrene-based monomer include styrene, α-methylstyrene, p-methylstyrene, vinyltoluene, and the like.

Specific examples of the phenyl group-containing (meth)acrylate include benzyl (meth)acrylate, phenyl (meth)acrylate, 2-hydroxy-3-phenoxypropyl (meth)acrylate, phenoxyethyl (meth)acrylate, phenoxypolyethylene glycol (meth)acrylate, nonylphenyl ethylene oxide adduct (meth)acrylate, and the like.

Specific examples of the phenyl group-containing maleimide include N-phenylmateimide, N-(2-chlorophenyl)maleimide, and the like.

In this connection, only one or two or more of the above aromatic group-containing monomers may be used.

### (C) Ionic monomer

As the (C) ionic monomer constituting the crosslinked copolymer according to the invention, there may be mentioned anionic monomers and cationic monomers.

Representative examples of the anionic monomer include unsaturated carboxylic acid monomers, unsaturated sulfonic acid monomers, unsaturated phosphoric acid monomers, and the like. Specific examples of the unsaturated carboxylic acid monomer include acrylic acid, methacrylic acid, maleic acid, fumaric acid, crotonic acid, itaconic acid, citraconic acid, and the like or anhydrides and salts thereof.

Specific examples of the unsaturated sulfonic acid monomer include styrenesulfonic acid, 2-acrylamido-2-methylpropanesulfonic acid, 3-sulfopropyl (meth)acrylate, bis-(3-sulfopropyl) itaconate, and the like and salts thereof, sulfuric acid monoesters of 2-hydroxyethyl (meth)acrylate and salts thereof, and the like. Specific examples of the unsaturated phosphoric acid monomer include vinylphosphonic acid, bis(methacryloxyethyl) phosphate, diphenyl-2-acryloyloxyethyl phosphate, diphenyl-2-methacryloyloxyethyl phosphate, dibutyl-2-acryloyloxyethyl phosphate, dibutyl-2-methacryloyloxyethyl phosphate, and the like.

Specific examples of the cationic monomer include unsaturated tertiary amine-containing monomers, unsaturated ammonium salt-containing monomers, and the like. As the unsaturated tertiary amine-containing monomer, there may be mentioned monovinylpyridines such as vinylpyridine, 2-methyl-5-vinylpyridine, and 2-ethyl-5-vinylpyridine; styrenes containing a dialkylamino group, such as N,N-dimethylaminostyrene and N,N-dimethylaminomethylstyrene; (meth)acrylic acid esters containing a dialkylamino group, such as N,N-dimethylaminomethyl (meth)acrylate, N,N-dimethylaminoethyl (meth)acrylate, N,N-diethylaminomethyl (meth)acrylate, N,N-diethylaminoethyl (meth)acrylate, N,N-dimethylaminopropyl (meth)acrylate, and N,N-diethylaminopropyl (meth)acrylate; vinyl ethers containing a dialkylamino group, such as 2-dimethylaminoethyl vinyl ether; (meth)acrylamides containing a dialkylamino group, such as N-(N',N'-dimethylaminoethyl)acrylamide, N-(N',N'-dimethylaminoethyl)methacrylamide, N-(N',N'-diethylaminoethyl)acrylamide, N-(N',N'-diethylaminoethyl)methacrylamide, N-(N',N'-dimethylaminopropyl)acrylamide, N-(N',N'-dimethylaminopropyl)methacrylamide, N-(N',N'-diethylaminopropyl)acrylamide, and N-(N',N'-diethylaminopropyl)methacrylamide, and the like. As the unsaturated ammonium salt-containing monomer, there may be mentioned those obtained by quaternarization of the above unsaturated tertiary amine-containing monomers with quaternarization agents such as alkyl halides (alkyl group: C1 to C18, halogen atom: chlorine atom, bromine atom, or iodine atom); benzyl halides such as benzyl chloride and benzyl bromide; esters of alkylsulfonic acids (alkyl group: C1 to C18) such as methanesulfonic acid; alkyl esters (alkyl group: C1 to C18) of arylsulfonic acids such as benzenesulfonic acid and toluenesulfonic acid; dialkyl sulfates (alkyl group: C1 to C4), and the like.

### 1.2 Other components

The crosslinked copolymer according to the invention contains the above (A) crosslinkable monomer, (B) aromatic group-containing monomer, and (C) ionic monomer as essential constituting components but, the polymer may contain other monomers according to need in addition to the above components (A) to (C). As the other monomers, there may be mentioned alkyl (meth)acrylates such as methyl (meth)acrylate, ethyl (meth) acrylate, propyl (meth) acrylate, butyl (meth)acrylate, hexyl (meth) acrylate and cyclohexyl (meth)acrylate; hydroxyalkyl (meth)acrylates such as hydroxyethyl (meth)acrylate and hydroxypropyl (meth)acrylate; (meth) acrylamide, vinyl acetate, N-vinylpyrrolidone, (meth)acrylonitrile, and the like. In this connection, only one or two or more of the other monomers may be used.

### 1.3 Constitutional ratio of each component

With regard to the ratio of each monomer of the above components (A) to (C) in the constitution of the crosslinked copolymer of the invention, the ratio of the (A) crosslinkable monomer is preferably in the range of 0.01 to 5 mol%, more preferably in the range of 0.02 to 5 mol% on the basis of total molar number of the total monomers. When the ratio is less than .0.01 mol%, the crosslinked copolymer formed does not exhibit a sufficient dispersing effect. When the ratio exceeds 5 mol%, the crosslinked copolymer formed does not dissolve or is not swelled in water and thus it does not function as a dispersant.

The ratio of the (B) aromatic group-containing monomer is preferably in the range of 30 to 90 mol%, more preferably in the range of 40 to 80 mol%. When the ratio is less than 30 mol%, hydrophobicity decreases and hence a substance to be dispersed such as a colorant becomes immiscible, so that dispersion stability becomes insufficient. When the ratio exceeds 90 mol%, the crosslinked copolymer is not sufficiently water-soluble, so that a dispersed product prepared using the resulting dispersant has an increased viscosity or has viscosity which is apt to vary with time in some cases.

The ratio of the (C) ionic monomer is preferably in the range of 5 to 65 mol%, more preferably in the range of 10 to 60 mol%. When the ratio is less than 5 molt, the crosslinked copolymer is not sufficiently water-soluble, so that a dispersed product prepared using the resulting dispersant has an increased viscosity or has viscosity which is apt to vary with time in some cases. When the ratio exceeds 65 mol%, since the amount of the (B) aromatic group-containing monomer decreases, hydrophobicity decreases and hence a substance to be dispersed such as a colorant becomes immiscible, so that dispersion stability becomes insufficient.

### 1.4 Process for producing polymer

For synthesizing the crosslinked copolymer, preferred is a process using a radical polymerization initiator because polymerization operations and control of molecular weight are easy. Moreover, since the aromatic group-containing monomer is difficult to dissolve in water, further preferred is a solution polymerization process wherein polymerization is carried out in an organic solvent.

As preferred solvents at the radical polymerization in the solution polymerization, there may be mentioned ketone solvents such as acetone, methyl ethyl ketone, and methyl isobutyl ketone; acetic acid ester solvents such as ethyl acetate and butyl acetate; aromatic hydrocarbon solvents such as benzene, toluene, and xylene; isopropanol, ethanol, cyclohexane, tetrahydrofuran, dimethylformamide, dimethyl sulfoxide, hexamethylphosphoramide, and the like. More preferred are ketone solvents, acetic acid ester solvents, and alcohol solvents.

As the radical polymerization initiator, any commonly used ones are usable and specifically, there may be mentioned ammonium persulfate, sodium persulfate, potassium persulfate, peroxy ketals, hydroperoxides, dialkyl peroxides, diacyl peroxides, peroxy dicarbonates, peroxy esters, cyano-based azobisisobutyronitrile, azobis(2-methylbutyronitrile), azobis(2-amidinopropane) hydrochloride, non-cyano-based dimethyl-2,2'-azobbisisobutyrate, and the like. Preferred are organic peroxides and azo compounds easily controlling molecular weight and having a low decomposition temperature and particularly, more preferred are azo compounds.

The amount of the polymerization initiator to be used is preferably 0.01 to 10% by mass, more preferably 0.1 to 5% by mass based on the total mass of the polymerizable monomers.

Moreover, for controlling the molecular weight of the crosslinked copolymer, a suitable amount of a chain transfer agent such as mercaptoacetic acid, mercaptopropionic acid, 2-propanethiol, 2-mercaptoethanol, thiophenol, dodecyl mercaptan, or thioglycerol may be added to the polymerization system.

Preferred polymerization temperature is 50 to 150°C, more preferably 60 to 100°C. Preferred polymerization time is usually 5 to 25 hours. The molecular weight of the crosslinked copolymer of the invention is preferably 1,000 to 100,000 as weight average molecular weight in the gel permeation chromatography (GPC) using polystyrene as a standard substance and is more preferably 1,000 to 50,000 from the viewpoint of suitable dispersibility and suitable solution viscosity. A polymer having a weight average molecular weight of less than 1,000 results in a non-sufficient dispersion effect. Moreover, when the weight average molecular weight exceeds 100,000, viscosity increases to result in undissolution and a clumpy substance forms, so that the copolymer does not function as a dispersant.

### 2. Aqueous ink

The aqueous ink of the invention contains a colorant and an aqueous medium as essential components in addition to the dispersant described in the above 1.

### 2.1 Colorant

The colorant for use in the aqueous ink of the invention is either of a dye or a pigment insoluble in aqueous solvents.

Dyes are classified to water-soluble dyes and hydrophobic dyes but preferred are hydrophobic dyes from the viewpoint of water resistance. Thus, as the colorant, preferred are hydrophobic dyes or pigments insoluble in aqueous solvents. Furthermore, more preferred are pigments in view of weather resistance.

As hydrophobic dyes, there may be mentioned oil dyes, disperse dyes, and the like. They can be suitably used both in a water dispersion of polymer particles obtained by incorporation into polymer particles and in a water dispersion dispersed in water using a dispersant. Specific examples of the oil dye include C.I.solvent Black, C.I.solvent Yellow, C.I.solvent Red, C.I.solvent Violet, C.I.solvent Blue, C.I.solvent Green, C.I.solvent Orange, and the like. As the disperse dyes, there may be mentioned C.I.dispersion Yellow, C.I.dispersion Orange, C.I.dispersion Red, C.I.dispersion Violet, C.I.dispersion Green, and the like.

The pigments may be either of inorganic pigments or organic pigments. They can be used solely or in combination according to need.

The particle size of the pigment is a sufficiently small one so that an ink freely flows particularly in an injection nozzle having a diameter usually ranging from 10 µm to 50 µm through an inkjet printing apparatus. The particle size influences pigment dispersion stability during durable time of the ink. Moreover, in order to strengthen color density to the maximum, it is desirable to have a smaller particle size.

The range of the particle size of useful pigments is about 0.005 µm to 15 µm, preferably 0.005 to 5 µm, most preferably 0.01 to 1 µm.

As the inorganic pigments, there may be mentioned carbon black, metal oxides, metal sulfides, metal chlorides, and the like. Of these, particularly in black color aqueous inks, carbon black is preferred.

As carbon black, there may be mentioned furnace black, thermal lump black, acetylene black, channel black, and the like. In particular, preferred is carbon black which is produced by a furnace process or a channel process and has a primary particle size of 15 to 40 µm, a specific surface area by a BET method of 50 to 300 m²/g, a DBP oil-absorbing amount of 40 to 150 ml/100 g, a volatile content of 0.5 to 10%, and a pH value ranging from 2 to 9. Specifically, there may be mentioned No. 2300, No. 900, MCF88, No. 33, No. 40, No. 45, No. 52, MA7, MA8, No. 2200B (all manufactured by Mitsubishi Chemical Corporation), RAVEN1255 (manufactured by Columbia), REGAL400R, REGAL330R, REGAL660R, MOGUL L (all manufactured by Cabot), Color Black FW1, Color Black FW18, Color Black S170, Color Black S150, Printex35, Printex U (all manufactured by Degussa), and the like.

As the organic pigments, there may be mentioned azo pigments, diazo pigments, phthalocyanine pigments, quinacridone pigments, isoindolinone pigments, dioxazine pigments, perylene pigments, perynone pigments, thioindigo pigments, anthraquinone pigments, quinophthalone pigments, and the like.

Specific examples of the organic pigments include C.I.Pigment Yellow 1, C.I.Pigment Yellow 2, C.I.Pigment Yellow 3, C.I.Pigment Yellow 13, C.I.Pigment Yellow 16, C.I.Pigment Yellow 83, C.I.Pigment Red 5, C.I.Pigment Red 7, C.I.Pigment Red 12, C.I.Pigment Red 48(Ca), C.I.Pigment Red 48(Mn), C.I.Pigment Red 57(Ca), C.I.Pigment Red 112, C.I.Pigment Red 122, C.I.Pigment Blue 1, C.I.Pigment Blue 2, C.I.Pigment Blue 3, C.I.Pigment Blue 15:3, C.I.Pigment Blue 16, C.I.Pigment Blue 22, C.I.Vat Blue 4, C.I.Vat Blue 6, and the like.

### 2.2 Aqueous medium

As the aqueous medium, a mixed solvent of water and a water-soluble organic solvent is suitable. Water is preferably ion-exchange water (deionized water) or distilled water. As the water-soluble organic solvent, there may be mentioned alkyl alcohols having 1 to 4 carbon atoms such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones or ketoalcohols such as acetone and diacetone alcohol; ethers such as tetrahydrofuran and dioxane; polyalkylene glycols such as polyethylene glycol and polypropylene glycol; alkylene glycols wherein the alkylene group contains 2 to 6 carbon atoms, such as ethylene glycol, propylene glycol, butylene glycol, triethylene glycol, 1,2-hexanediol, 1,2,6-hexanetriol, thiodiglycol, hexylene glycol, and diethylene glycol; glycerin; lower alkyl ethers of polyhydric alcohols, such as ethylene glycol monomethyl (or ethyl) ether, diethylene glycol methyl (or ethyl) ether, and triethylene glycol monomethyl (or ethyl) ether; N-methyl-2-pyrrolidone, 2-pyrrolidone, 1,3-dimethyl-2-imidazolidine, and the like. Among these water-soluble organic solvents, preferred are polyhydric alcohols such as diethylene glycol and lower alkyl ethers of polyhydric alcohols, such as triethylene glycol monomethyl (or butyl) ether.

In this connection, the above water-soluble organic solvent can be used solely or in combination of two or more of them, if necessary.

### 2.3 Other components

To the aqueous ink of the invention may be added known conventional various additives to be added usually to aqueous inks as components other than the above dispersant, colorant, and aqueous medium. As such additives, there may be mentioned a surfactant, a defoaming agent, an antiseptic, a precipitation inhibitor, a cheleting agent, a thickening agent, an anticorrosive, an antioxidant, and the like. As the surfactant, there may be mentioned anionic surfactants such as fatty acid salts, higher alcohol sulfuric acid ester salts, liquid fatty oil sulfuric acid ester salts, and alkylarylsulfonic acid salts and nonionic surfactants such as polyoxyethylene alkyl ethers, polyoxyethylene alkyl esters, polyoxyethylenesorbitan alkyl esters, acetylene alcohols, and acetylene glycols.

### 2.4 Preparation of aqueous ink

The amount of the above dispersant contained in the aqueous ink of the invention is preferably in the range of 0.1 to 30% by mass, more preferably in the range of 1 to 15% by mass based on the total mass of the ink. Moreover, the amount of the colorant contained in the aqueous ink is preferably in the range of 1 to 30% by mass, more preferably in the range of 2 to 15% by mass.

The ratio of the above dispersant to the colorant contained in the aqueous ink of the invention is in the range of preferably 1:1 to 1:30 (ratio by mass), more preferably 1:2 to 1:15.

The amount of the water-soluble organic solvent contained in the aqueous ink is preferably in the range of 3 to 50% by mass, more preferably in the range of 3 to 40% by mass based on the total mass of the aqueous ink. Moreover, the amount of water contained in the aqueous ink of the invention is preferably in the range of 10 to 90% by mass, more preferably in the range of 30 to 80% by mass.

Furthermore, pH of the aqueous ink is preferably in the range of 7 to 10. By controlling pH to this range, solubility of the dispersant comprising the above crosslinked copolymer can be improved and storage stability thereof can be enhanced. Additionally, corrosion of the members of an apparatus (e.g., an inkjet recording apparatus) to which the aqueous ink is applied can be inhibited.

For the pH control of the aqueous ink, inorganic alkali agents such as alkali metal hydroxides including sodium hydroxide and potassium hydroxide, organic amines such as diethanolamine and triethanolamine, organic acids such as citric acid and tartaric acid, mineral acids such as hydrochloric acid and phosphoric acid, and the like can be used as pH controlling agents.

The aqueous ink of the invention is obtained by mixing and dispersing the above respective components. The above respective components can be used in aqueous inks for inkjet and aqueous inks for writing tools such as aqueous ball-point pens and marker pens by diluting the components with or without adding a drying inhibitor and other additives, if necessary. In this case, in order to prevent an inkjet nozzle or a pen tip from clogging by drying, it is suitable to add a low-volatile or non-volatile solvent among the above water-soluble organic solvents. Moreover, in order to enhance infiltration ability into a recording medium, it is suitable to add a volatile solvent. In particular, in the case that the ink is used in aqueous inks for inkjet recording, it is also preferable to add a surfactant in order to impart a proper surface tension to the ink.

As the dispersing machine for use in the dispersion, there may be mentioned a ball mill, a roll mill, a sand mill, and the like. Of these, a high-speed sand mill is preferred and examples thereof include Supper mill, Sand grinder, Bead mill, Agitator mill, Grain mill, Dinomill, Pearl mill, Cobol mill (all of these are trade names), and the like.

The following will describe advantages obtained by the invention.

According to the dispersant of the invention, a colorant, particularly carbon black can be stably dispersed in an aqueous medium. This is because dispersion of the polymer itself in water is stabilized by introducing a hydrophobic portion (an aromatic group-containing monomer unit) and a hydrophilic portion (an ionic group-containing monomer unit) into the main chain structure and forming crosslinked structures partially between main chains as well as affinity to a colorant such as carbon black is increased by incorporating an aromatic group-containing monomer.

### <Examples>

The following will describe the invention in more detail with reference to Examples and Comparative Examples.

It is noted that "%" and "part" in the following Examples mean "% by mass" and "part by mass", respectively.

### Example 1

### [Synthesis of dispersant]

Into a glass flask fitted with a stirrer, a dropping funnel, a nitrogen gas-inlet tube, and a thermometer were charged 2 g (0.013 mol) of methylenebisacrylamide, 58 g (0.558 mol) of styrene, 40 g (0.465 mol) of methacrylic acid, and 900 g of methyl ethyl ketone. Under a nitrogen stream, with maintaining the inner temperature of the reactor at 78°C, 4.0 g of azobisisobutyronitrile (AIBN) was added thereto, followed by polymerization for 4 hours. Thereafter, 2.0 g of AIBN was further added and the whole was heated at 78°C for 3 hours to obtain a methyl ethyl ketone solution of a copolymer (solid matter 10%). When molecular weight of the copolymer was measured by a GPC method using tetrahydrofuran solvent, weight average molecular weight (hereinafter abbreviated as Mw) was found to be 7,100 in terms of polystyrene. Subsequently, to the above methyl ethyl ketone solution of the copolymer, diethanolamine equimolar to the carboxyl group contained in the copolymer and ion-exchange water were added to neutralize the solution. Then, methyl ethyl ketone was removed under reduced pressure to effect solvent removal, whereby an aqueous solution of a copolymer (solid matter 30%) was obtained.

### [Preparation of aqueous ink]

After 7.0 parts of the above aqueous solution of the copolymer (solid matter 30%), 15.0 parts of carbon black (S160 manufactured by Degussa), and 78.0 parts of ion-exchange water were mixed and premixing was conducted for 10 minutes, dispersion treatment was carried out under the following conditions.
Dispersing machine: Sand grinder (manufactured by Igarashi Kikai)
Pulverization media: zirconium beads (diameter of 1 mm)
Filling rate with pulverization media: 50% (by volume)
Pulverization time: 3 hours

After the above dispersion treatment, centrifugation treatment (12,000 RPM, 20 minutes) was carried out to remove coarse particles and 40 parts of the resulting dispersion was mixed with 5 parts of glycerin, 15 parts of diethylene glycol, 2 parts of 2-pyrrolidone, and 38 parts of ion-exchange water. Then, the mixture was controlled to pH 8 to 10 with diethanolamine and the resulting mixture was filtrated through a membrane filter having a pore size of 5.0 µm to obtain an objective aqueous ink.

### Example 2

In Example 1, monomers for use in synthesis of the copolymer were changed to 1 g (0.005 mol) of ethylene glycol dimethacrylate, 60 g (0.577 mol) of styrene, 30 g (0.417 mol) of acrylic acid, and 9 g (0.063 mol) of butyl methacrylate. When molecular weight of the resulting copolymer was measured, Mw was found to be 5,800. Other than the above, the same operations as in Example 1 were conducted to prepare an aqueous ink.

### Example 3

In Example 1, monomers for use in synthesis of the copolymer were changed to 0.5 g (0.003 mol) of methylenebisacrylamide, 55 g (0.529 mol) of styrene, and 44.5 g (0.283 mol) of dimethylaminoethyl methacrylate and a copolymer was synthesized. Then, the amino group contained in the copolymer was reacted with methyl chloride to effect quaternarization. When molecular weight of the resulting copolymer was measured, Mw was found to be 9,500. Other than the above, the same operations as in Example 1 were conducted to prepare an aqueous ink.

### Comparative Example 1

In Example 1, monomers for use in synthesis of the copolymer were changed to 60 g (0.577 mol) of styrene and 40 g (0.465 mol) of methacrylic acid alone without using a crosslinkable monomer. When molecular weight of the resulting copolymer was measured, Mw was found to be 6,800. Other than the above, the same operations as in Example 1 were conducted to prepare an aqueous ink.

### «Evaluation of aqueous ink»

The aqueous inks obtained in the above Examples 1 to 3 and Comparative Example 1 were evaluated with regard to the following items (a) to (d). The results are shown in Table 1.

### (a) Particle size of aqueous ink

After the resulting aqueous dispersion was diluted 100 times by adding water, volume average particle size of the aqueous ink was measured using "Microtrack UPA250" (manufactured by Nikkiso Co., Ltd.).

### (b) Dispersion stability of aqueous dispersion

After the resulting aqueous ink was left on standing in a closed state at 60°C for 6 months, the aqueous ink was evaluated as "×" or "○" when aggregation of pigment particles and thickening occur or do not occur, respectively.

### (c) Print density

Using a micro-bubble-jet printer (Model BJ-10VL manufactured by Canon Inc.), solid-print was conducted on PPC recycled paper (manufactured by Nihon Kako Seishi). Then, optical density of the print after natural seasoning at room temperature for 24 hours was measured on Macbeth densitometer RD918 (manufactured by Macbeth).

In this connection, the micro-bubble-jet printer is a registered trademark of Canon Inc.

### (d) Picture quality characteristics

With regard to occurrence of uneven image density and white lines at black solid image printing, no occurrence was assigned as "○", slight observation as "Δ ", and obvious occurrence as "×".

**Table 1**

| | Volume average particle size (nm) | Dispersion stability | Print density | Picture quality characteristics |
|---|---|---|---|---|
| Example 1 | 90 | ○ | 1.43 | ○ |
| Example 2 | 95 | ○ | 1.42 | ○ |
| Example 3 | 98 | ○ | 1.41 | Δ |
| Comparative Example 1 | 102 | × | 1.38 | × |

As shown in Table 1, satisfactory results were obtained in the case of the aqueous inks of the Examples as compared with the case of the aqueous ink of the Comparative Example. It is considered that this is because dispersion stability of the dispersant (crosslinked copolymer) used in each Example is excellent as compared with that of the Comparative Example.

### <Industrial Applicability>

The aqueous ink of the present invention exhibits no aggregation and increase in viscosity of the ink even when left on standing for a long period of time and has a practical storage stability and also results in printed articles excellent in light resistance and picture quality characteristics, so that the ink is extremely useful for inkjet recording.

## Claims

1. An aqueous ink comprising a dispersant, a colorant, and an aqueous medium, wherein the dispersant is a crosslinked copolymer containing (A) a crosslinkable monomer, (B) an aromatic group-containing monomer, and (C) an ionic monomer as essential components.

2. The aqueous ink according to claim 1, wherein the above dispersant is a crosslinked copolymer having a weight average molecular weight of 1,000 to 100,000 and comprising 0.01 to 5 mol% of (A) a crosslinkable monomer, 30 to 90 mol% of (B) an aromatic group-containing monomer, and 5 to 65 mol% of (C) an ionic monomer.

3. The aqueous ink according to claim 1 or 2,
wherein the (C) ionic monomer as a constituting component of the above dispersant is an anionic monomer.

4. The aqueous ink according to claim 1 or 2,
wherein the (C) ionic monomer as a constituting component of the above dispersant is a cationic monomer.

5. The aqueous ink according to any one of claims 1 to 4, wherein a ratio of the above dispersant to the colorant contained is 1:1 to 1:30 (mass ratio).

6. The aqueous ink according to any one of claims 1 to 5, wherein the colorant is a pigment.

7. The aqueous ink according to any one of claims 1 to 5, wherein the colorant is carbon black.
